(19) Europäisches Patentamt
European Patent Office
Office européen des brevets

(11) **EP 2 536 203 A1**

(12) **EUROPEAN PATENT APPLICATION**
published in accordance with Art. 153(4) EPC

(43) Date of publication:
**19.12.2012 Bulletin 2012/51**

(51) Int Cl.:
***H04W 28/06*** (2009.01)

(21) Application number: **11741869.9**

(22) Date of filing: **28.01.2011**

(86) International application number:
**PCT/CN2011/070744**

(87) International publication number:
**WO 2011/097998 (18.08.2011 Gazette 2011/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.02.2010   CN 201010111879**

(71) Applicant: **China Academy of
Telecommunications Technology
Hai Dian District
Beijing 100191 (CN)**

(72) Inventors:
• **PAN, Xueming
  Beijing 100083 (CN)**
• **SHEN, Zukang
  Beijing 100083 (CN)**
• **ZHAO, Rui
  Beijing 100083 (CN)**
• **XIAO, Guojun
  Beijing 100083 (CN)**

(74) Representative: **Pfenning, Meinig & Partner GbR
Theresienhöhe 13
80339 München (DE)**

(54)    **METHOD, SYSTEM AND DEVICE FOR SCHEDULING NON-COMPETING RANDOM ACCESS AND TRANSMITTING PREAMBLE.**

(57)    A method, system and device for scheduling a non-contention based random access and transmitting a preamble are provided in the present invention. The present invention belongs to wireless telecommunication field and is used to solve a problem that the prior art is not able to support cross carrier non-competing random access scheduled by a Physical Downlink Control Channel (PDCCH). In the present invention, a Base Station (BS) adds Uplink Component Carrier (ul cc) identification information in a Downlink Control Information (DCI) signaling which is used to schedule a User Equipment (UE) to implement non-competing random access; and sends the UE the DCI signaling through the PDCCH. After detecting the DCI signaling, the UE sends the network side a preamble sequence on a UL CC corresponding to the UL CC identification. With the present invention, support is provided to realize cross carrier non-competing random access scheduled by PDCCH.

Fig.10

EP 2 536 203 A1

**Description**

**Field of the Invention**

The present invention relates to the field of radio communications and particularly to a method, system and device for scheduling a non-contention based random access and transmitting a preamble.

**Background of the Invention**

In a Long Term Evolution (LTE) system, there are two types of random accesses, i.e., a contention based random access and a non-contention based random access. Particularly the former is typically applicable to a scenario with an initial access of a user equipment, and a random access channel and a preamble sequence used in the contention based random access are selected by the User Equipment (UE) randomly from a set of configurations broadcast from a base station; and the latter is typically applicable to a scenario with downlink data arrival or handover, that is, the base station requires the random access to be initiated from the user equipment to establish uplink synchronization so that subsequent data transmission can be performed normally, and a random access channel and a preamble sequence used in the non-contention based random access are notified from the base station to the user equipment in signaling, particularly signaling over a Physical Downlink Control Channel (PDCCH).

For a Long Term Evolution-Advanced (LTE-A) system, resources of a plurality of LTE carriers (also referred to as component carriers) have to be connected for use, particularly in the following two ways, so as to support a higher system bandwidth, e.g., 100MHz, than the LTE system:

In one way, a plurality of consecutive LTE carriers are aggregated to provide the Long Term Evolution-Advanced (LTE-A) with a larger transmission bandwidth.

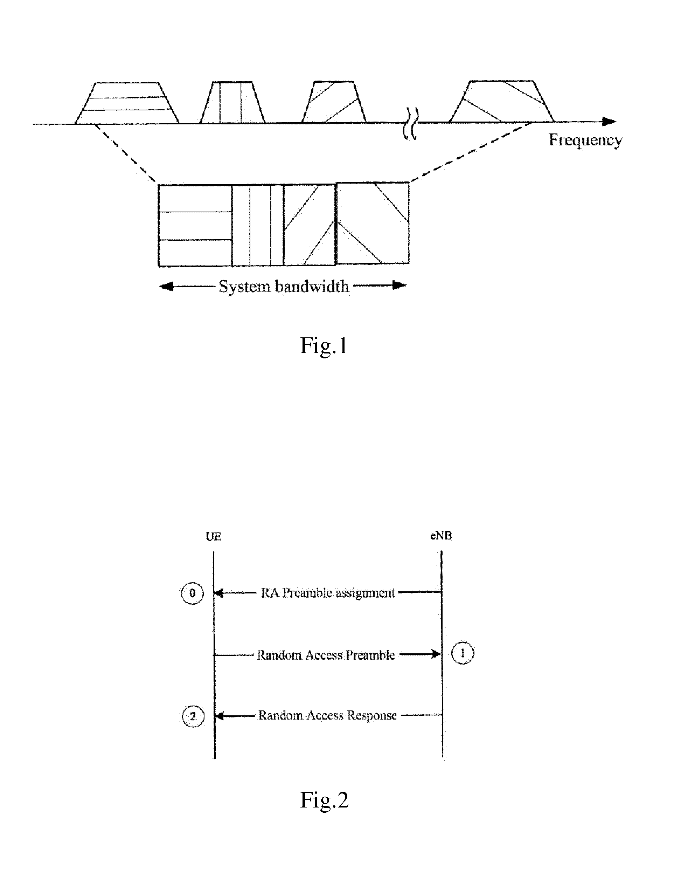

In the other way, a plurality of inconsecutive LTE carriers are aggregated to provide the LTE-A with a larger transmission bandwidth. Fig.1 illustrates an example of aggregating inconsecutive carriers.

At present a common view of the standardization organization regarding a design of a carrier aggregation system is to keep a design over each carrier as consistent with the LTE Release 8 (R8) as possible to thereby ensure that an LTE R8 user equipment can operate normally over each component carrier.

In a carrier aggregation system, the 3GPP has come to a conclusion about determining an initial random access process, that is, a random access process is performed simply over a single carrier in a way consistent with the LTE Release 8 (R8). A non-contention based random access is still under study and discussion. A study showed that the continued use of LTE R8 single-carrier transmission for a non-contention based random access may not be applicable to all scenarios, and in some cases, a non-contention based random access with cross-carrier scheduling has to be adopted or can improve the performance of the system.

In the LTE system, a non-contention based random access process includes the following several steps as illustrated in Fig.2:

Step 0: A base station assigns a UE with a specific preamble sequence over a PDCCH of a downlink carrier in response to a current service demand;

Step 1: The UE transmits the specified preamble sequence at a specific time and frequency resource over a corresponding uplink carrier upon reception of a signaling indication over the PDCCH; and

Step 2: The base station transmits a random access response over the downlink carrier upon reception of the preamble sequence of a random access and performs subsequent signaling interaction and data transmission.

In ongoing discussion about the standard of the LTE-A, there are two candidate solutions as follows to a PDCCH design of a carrier aggregation system in view of complexity of the PDCCH design, flexibility of scheduling and asymmetric uplink and downlink carrier aggregation:

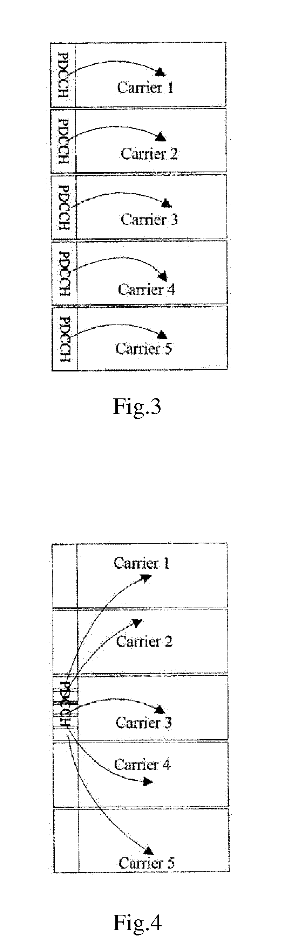

In one solution, a PDCCH is transmitted separately over each carrier, and a physical resource of only that carrier can be scheduled over the PDCCH, as illustrated in Fig.3; and

In the other solution, a plurality of carrier resources are scheduled over a plurality of separate PDCCHs carried over one or more carriers, and this solution is an improvement to the former solution. In this case, a resource of only one carrier can be scheduled over each PDCCH, as illustrated in Fig.4 taking a plurality of PDCCHs carried over a carrier as example.

As currently discussed for the 3GPP standard, both non-cross-carrier scheduling and cross-carrier scheduling modes are supported for an LTE-A user, and a base station schedules a user equipment in either of the modes as needed in practice.

Since there are only one pair of uplink and downlink carriers in the LTE system, all the foregoing flows take place over this pair of carriers. In the LTE-A system, control channel co-frequency interference between cells is very serious due to diversified types of base stations and a large number of densely deployed home base stations, relay stations, etc., and a current study showed that inter-cell interference in the LTE-A multi-carrier system can be lowered and the performance of the system can be improved effectively if different component carriers are used in adjacent cells as high power PDCCH transmission carriers in the system.

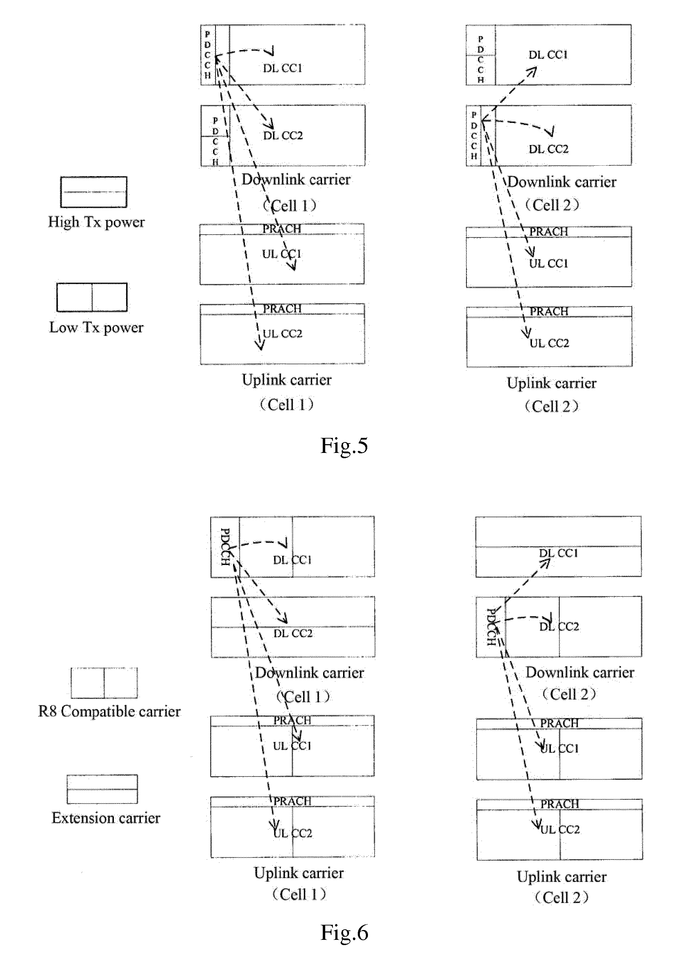

In Fig.5, for example, a downlink component carrier 1 (DL CCl) is used in a cell 1 as a high power PDCCH transmission carrier, a downlink component carrier 2 (DL CC2) is used in a cell 2 as a high power PDCCH transmission carrier, and PDCCHs of other carriers are transmitted at low power. In a scenario with limited interference, data transmission of respective downlink/uplink carriers can be scheduled over PDCCHs transmitted over high power carriers to ensure reliability of PDCCH transmission.

Furthermore the 3GPP is also in discussion about whether introduce a new component carrier type (CC type) to the LTE-A, and as currently discussed, an extension carrier type may additionally be introduced besides R8 compatible component carriers, where only data but no control signaling may be transmitted over an extension carrier. As illustrated in Fig.6, the DL CC1 of the cell 1 is a R8 compatible component carrier, and the DL CC2 is a extension carrier transmitting only data, so all the PDCCHs transmitting scheduling signaling in the cell 1 have to be transmitted over the DL CC1, and the DL CC2 and the UL CC2 are scheduled in the cross-carrier scheduling mode.

In the scenarios illustrated in Fig.5 and Fig.6, in order for a UE to obtain accurate uplink synchronization over each UL CC, a base station has to schedule the UE to be able to transmit a non-contention based Physical Random Access Control Channel (PRACH) over each uplink CC. As mentioned earlier, a non-contention based random access is generally scheduled over a PDCCH, and in the scenarios illustrated in Fig.3 and Fig.4, a PDCCH can only or preferably be transmitted over a specific carrier, and therefore cross-carrier scheduling has to also be supported for a PDCCH over which a non-contention based random access is scheduled.

Also the following four scenarios are specified for identical or different Track Areas (TAs) of respective CCs in a 3GPP Radio Access Network (RAN4):

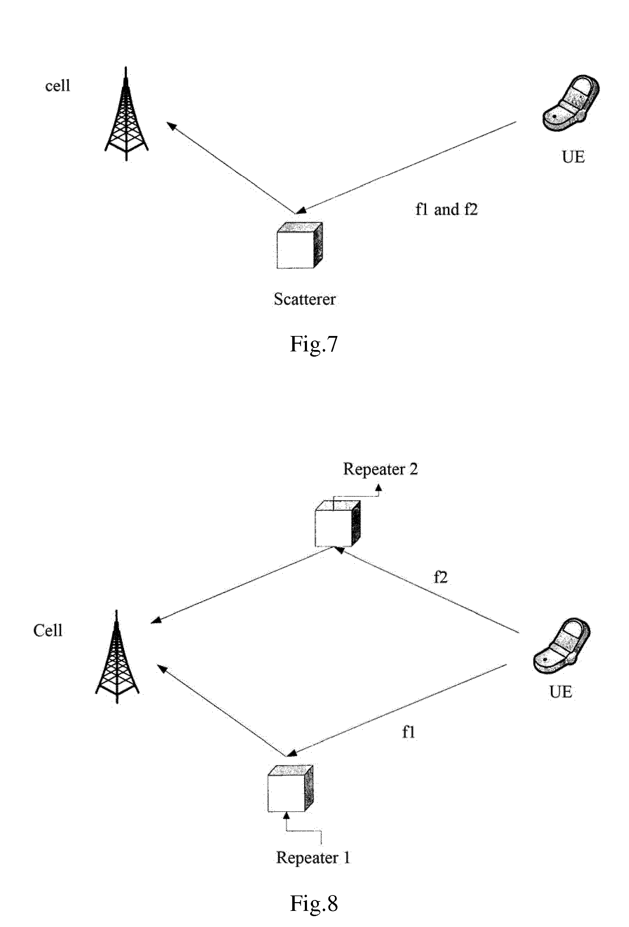

Scenario 1: There are identical TAs of respective CCs in the case that a repeater, a Remote Radio Unit (RRU) and Coordinated Multi-Point (CoMP) are not introduced, as illustrated in Fig.7.

Scenario 2: TAs of different CCs may be different in the case that repeaters with different frequency selectivity are introduced, as illustrated in Fig.8.

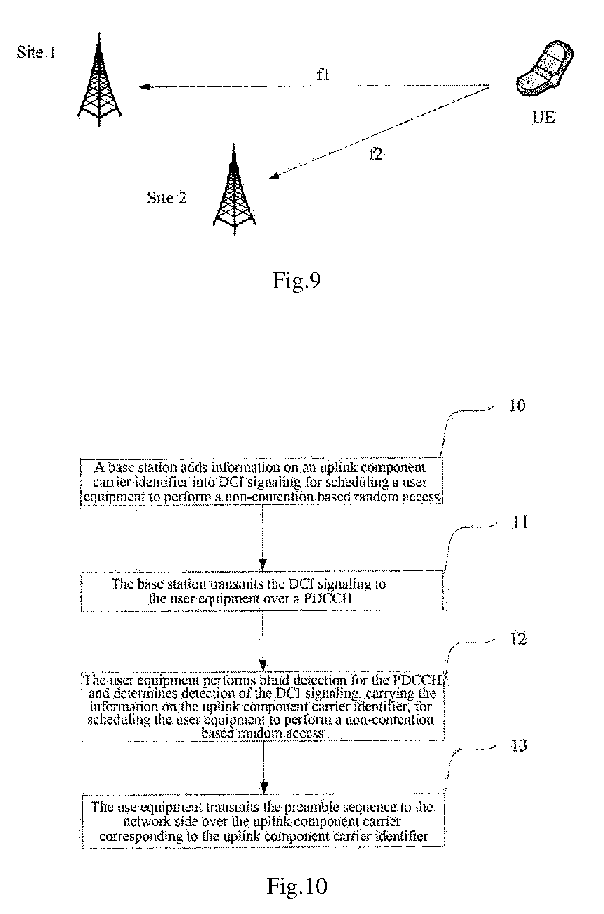

Scenario 3: TAs of respective CCs may be different when there are non-collocated sites and the different CCs are transmitted through different stations, as illustrated in Fig.9.

Scenario 4: A user equipment has different TAs for different stations participating in coordination for uplink CoMP.

Thus when there are different TAs of respective CCs, uplink synchronization has to be performed for those CCs to be aggregated so as to perform a carrier aggregation operation.

In the LTE system, a user equipment receives a PDCCH through blind detection. Specifically blind detection is performed concurrently for PDCCHs in a common search space and a UE-specific search space, and a CCE (Control Channel Elements) aggregation level of a PDCCH can be 1, 2, 4 and 8. The number of candidate PDCCHs to be subject to blind detection is different at each CCE aggregation level.

Also in each transmission mode, blind detection is performed for two Downlink Control Information (DCI) formats which are differentiated from each other by their lengths. At the user equipment, there are at most 44 rounds of blind detection, including 12 ones in the common search space and 32 ones in the UE-specific search space, for a DCI format at the different aggregation levels.

In the common search space, the UE performs blind detection for PDCCHs scrambled with a System Information Radio Network Temporary Identifier (SI-RNTI), a Private Radio Network Temporary Identifier (P-RNTI) and a Random Access Radio Network Temporary Identifier (RA-RNTI) for reception of system information, paging information and random access response information respectively. Also in the common search space, the UE performs blind detection for a PDCCH scrambled with a Cell Radio Network Temporary Identifier (C-RNTI) in the format of the DCI format 1A.

In the UE-specific search space, the UE performs blind detections for DCIs in different formats, including the DCI format 1A, the DCI format 1, the DCI format 1B and the DCI format 1D, in different transmission modes.

A specific format of the DCI format 1A is defined in the LTE R8.

Also in the LTE R8, the base station schedules a non-contention based random access in the DCI format 1A scrambled with a C-RNTI, and the specific length of the DCI is totally the same as the normal DCI format 1A, but specific meanings of its information fields are specially defined particularly as follows:

One bit is occupied for a field of a format 0/format 1A differentiation flag which takes the value of 0 to represent the format 0 and the value of 1 to represent the format 1. This field is the same as the normal DCI format 1A;

One bit is occupied for a field of a Localized/Distributed VRB assignment flag which takes the value of 0. This information flag is set to 0 because this field is not required for scheduling a non-contention based random access;

$\left\lceil \log_2(N_{\mathrm{RB}}^{\mathrm{DL}}(N_{\mathrm{RB}}^{\mathrm{DL}}+1)/2) \right\rceil$ bits are occupied for a resource block assignment field, and all the bits are set to 1, where $N_{\mathrm{RB}}^{\mathrm{DL}}$ represents a system bandwidth in Physical Resource Block (PRB);

Six bits are occupied for a preamble index field to represent a preamble index for the random access;

Four bits are occupied for a PRACH mask index field to indicate the index of a PRACH channel used for the random access; and

All other bit fields (i.e., idle fields) are set to be all-zero.

As can be apparent from the foregoing introduction, the DCI format 1A has a variety of functions including scheduling system information scrambled with an SI-RNTI in the common search space, scheduling paging information scrambled with a P-RNTI in the common search space, scheduling random access response information scrambled with an RA-RNTI in the common search space, scheduling UE-specific data scrambled with a C-RNTI in the common search space, scheduling a non-contention based random access scrambled with a C-RNTI in the common search space, scheduling UE-specific data scrambled with a C-RNTI in the UE-specific search space, and scheduling a non-context random access scrambled with a C-RNTI in the UE-specific search space.

The inventors have identified during making of the invention the following technical problem in the prior art:

A cross-carrier non-contention based random access scheduled over a PDCCH cannot be supported in the prior art when a UE is configured in an cross-carrier scheduling mode.

**Summary of the Invention**

Embodiments of the invention provide a method, system and device for scheduling a non-contention based random access and transmitting a preamble so as to address the problem in the prior art of failing to support a cross-carrier non-contention based random access scheduled over a PDCCH.

A method for scheduling a non-contention based random access includes:

a base station adding information on an uplink component carrier identifier into Downlink Control Information, DCI, signaling for scheduling a user equipment to perform a non-contention based random access; and

the base station transmitting the DCI signaling to the user equipment over a Physical Downlink Control Channel, PDCCH, to instruct the user equipment to transmit a preamble sequence to the network side over an uplink component carrier corresponding to the information on the uplink component carrier identifier.

A method for transmitting a preamble in a carrier aggregation system includes:

a user equipment performing blind detection for a Physical Downlink Control Channel, PDCCH;

the user equipment determining detection of Downlink Control Information, DCI, signaling carrying information on an uplink component carrier identifier, the DCI signaling scheduling the user equipment to perform a non-contention based random access; and

the user equipment transmitting a preamble sequence to the network side over an uplink component carrier corresponding to the uplink component carrier identifier.

A base station includes:

a carrier information adding unit configured to add information on an uplink component carrier identifier into Downlink Control Information, DCI, signaling for scheduling a user equipment to perform a non-contention based random access; and

a DCI signaling transmitting unit configured to transmit the DCI signaling over a PDCCH to the user equipment to instruct the user equipment to transmit a preamble sequence to the network side over an uplink component carrier corresponding to the uplink component carrier identifier.

A user equipment includes:

a blind detection unit configured to perform blind detection for a Physical Downlink Control Channel, PDCCH, and to determine detection of DCI signaling, carrying information on an uplink component carrier identifier, for scheduling the user equipment to perform a non-contention based random access; and

a sequence transmitting unit configured for the user equipment to transmit a preamble sequence to the network side over an uplink component carrier corresponding to the uplink component carrier identifier.

A radio communication system includes:

a base station configured to add information on an uplink component carrier identifier into Downlink Control Information, DCI, signaling for scheduling a user equipment to perform a non-contention based random access and to transmit the DCI signaling to the user equipment over a Physical Downlink Control Channel, PDCCH; and

the user equipment configured to perform blind detection for the PDCCH, to determine detection of the DCI signaling, carrying the information on the uplink component carrier identifier, for scheduling the user equipment to perform a non-contention based random access, and to transmit a preamble sequence to the network side over an uplink component carrier corresponding to the uplink component carrier identifier.

In the invention, a base station adds information on an uplink component carrier identifier into DCI signaling for scheduling a user equipment to perform a non-contention based random access and transmits the DCI signaling to the user equipment over a PDCCH, and the user equipment performs blind detection for the PDCCH and transmits a preamble sequence to the network side over an uplink component carrier indicated in the DCI signaling upon detection of the DCI signaling. Apparently in the invention, information on an uplink component carrier identifier is added into DCI signaling for scheduling a user equipment to perform a non-contention based random access so that the user equipment can determine from the DCI an uplink component carrier for transmission of a preamble sequence upon detection of the DCI and further transmit the preamble sequence over the uplink component carrier, thereby providing a support for an cross-carrier non-contention based random access scheduled over a PDCCH.

**Brief Description of the Drawings**

Fig.1 is a schematic diagram of carrier aggregation in the prior art;

Fig.2 is a schematic diagram of a flow of non-contention based random access in the prior art;

Fig.3 is a schematic diagram of non-cross-carrier scheduling over a PDCCH in the prior art;

Fig.4 is a schematic diagram of cross-carrier scheduling over a PDCCH in the prior art;

Fig. 5 is a schematic diagram of PDCCH power coordination between cells in the prior art;

Fig.6 is a PDCCH scheduling scheme with an extension carrier in the prior art;

Fig.7 is a schematic diagram of the scenario 1 in the prior art;

Fig.8 is a schematic diagram of the scenario 2 in the prior art;

Fig.9 is a schematic diagram of the scenario 3 in the prior art;

Fig.10 is a schematic flow chart of a method according to an embodiment of the invention;

Fig.11 is a schematic structural diagram of a system according to an embodiment of the invention;

Fig.12 is a schematic structural diagram of a base station according to an embodiment of the invention; and

Fig.13 is a schematic structural diagram of a user equipment according to an embodiment of the invention.

**Detailed Description of the Embodiments**

In order to address the problem in the prior art of failing to support an cross-carrier non-contention based random access scheduled over a PDCCH, the embodiments of the invention provide a method for scheduling a non-contention based random access and transmitting a preamble in a carrier aggregation system, and in the method, a base station transmits, to a user equipment, DCI signaling, carrying information on an uplink component carrier identifier, for scheduling the user equipment to perform a non-contention based random access, and the user equipment transmits a preamble sequence over an uplink component carrier indicated in the DCI signaling.

Referring to Fig.10, a method for scheduling a non-contention based random access and transmitting a preamble in a carrier aggregation system according to an embodiment of the invention particularly includes the following steps:

Step 10: A base station adds information on an uplink component carrier identifier into DCI signaling for scheduling a user equipment to perform a non-contention based random access;

Step 11: The base station transmits the DCI signaling carrying the information on the uplink component carrier identifier to the user equipment over a PDCCH to instruct the user equipment to transmit a preamble sequence to the network side over an uplink component carrier corresponding to the uplink component carrier identifier;

Step 12: The user equipment performs blind detection for the PDCCH and determines detection of the DCI signaling, carrying the information on the uplink component carrier identifier, for scheduling the user equipment to perform a non-contention based random access; and

Step 13: The use equipment transmits the preamble sequence to the network side over the uplink component carrier corresponding to the information on the uplink component carrier identifier carried in the detected DCI signaling.

At the base station side:

The step 10 can be performed in the following two approaches:

In one approach, the base station additionally sets a Carrier Indicator Field (CIF) in the DCI signaling for scheduling the user equipment to perform a non-contention based random access and adds the information on the uplink component carrier identifier into this CIF field.

Specifically the base station additionally sets the CIF field at any fixed location in the DCI signaling for scheduling the user equipment to perform a non-contention based random access, and preferably can additionally set the CIF field at the head or tail of the DCI signaling.

Correspondingly in the step 11, the base station can transmit the DCI signaling carrying the information on the uplink component carrier identifier to the user equipment in a UE-specific search space.

In the other approach, the base station takes a part of idle bits in the DCI signaling as a CIF field and carries the information on the uplink component carrier identifier in this CIF field, that is, adds the information on the uplink component carrier identifier into the CIF field.

After the information on the uplink component carrier identifier is added into the CIF field, the base station can further determine whether there is(are) a(some) further idle bit(s) remaining in the DCI signaling, and if so, then the remaining idle bit(s) is(are) set to 0.

Correspondingly in the step 11, the base station transmits the DCI signaling to the user equipment in a common search space or a UE-specific search space.

At the user equipment side:

In correspondence to the foregoing first approach, in the step 12, the DCI signaling detected by the user equipment is DCI signaling in which the CIF field carrying the information on the uplink component carrier identifier is set and which schedules the user equipment to perform a non-contention based random access. The user equipment can detect the DCI signaling in the UE-specific search space.

In correspondence to the foregoing second approach, in the step 12, the DCI signaling detected by the user equipment is DCI signaling in which the idle field carries the information on the uplink component carrier identifier and which schedules the user equipment to perform a non-contention based random access. The user equipment can detect the DCI signaling in the UE-specific search space or the common search space..

In the invention, three bits can be occupied for the information on the uplink component carrier identifier carried in the DCI signaling, and the DCI signaling can particularly be a signaling in the format of the DCI format 1A.

The invention will be described in connection with embodiments thereof.

First Embodiment:

In this embodiment, a CIF field (for which three bits are occupied) is set at a fixed bit location in DCI signaling scrambled with a C-RNTI, for scheduling a non-contention based random access and in the DCI format 1A, and for a simple design, the CIF field can be placed at the head or tail of the DCI signaling. The following description will be given taking a CIF field placed at the head of DCI signaling as an example:

Step S01: A base station transmits DCI signaling carrying a CIF field to a UE over a PDCCH of a downlink carrier in response to a current service demand, and the DCI signaling is in the following format:

CIF field, for which three bits are occupied and which carries information on an uplink component carrier identifier;

Field of format 0/format 1A differentiation flag, for which one bit is occupied and which, for example, takes the value of 0 to represent the format 0 and the value of 1 to represent the format 1, wherein this field is the same as the normal DCI format 1A;

Field of Localized/Distributed VRB assignment flag, for which one bit is occupied and which takes the value of 0, wherein this information field is set to 0 because this field is not required for scheduling a non-contention based random access;

Resource block assignment field, for which

$$\left\lceil \log_2(N_{RB}^{DL}(N_{RB}^{DL}+1)/2) \right\rceil$$ bits are occupied, and all of which are set to 1, where $N_{RB}^{DL}$ represents a system bandwidth in Physical Resource Block (PRB);

Preamble index field, for which six bits are occupied to represent a preamble index for the random access;

PRACH mask index field, for which four bits are occupied to indicate the index of a PRACH channel used for the random access; and

All other bit fields (i.e., idle fields) are set to be zero.

Step S02: The UE configured in an cross-carrier scheduling mode detects the DCI signaling in the forgoing format over the PDCCH and then determines that the DCI signaling is DCI signaling for scheduling a non-contention based random access and transmits a preamble sequence indicated in the preamble index field of the DCI signaling to the base station at a time and frequency resource indicated in the resource block assignment field of the DCI signaling over an uplink component carrier corresponding to the uplink component carrier identifier carried in the CIF field of the DCI signaling; and

Step S03: The base station transmits a random access response over the downlink carrier upon reception of the preamble sequence transmitted from the UE and performs subsequent signaling interaction and data transmission.

Since the information length of the original LTE R8 DCI format 1A is actually changed in this embodiment and the DCI format 1A is also used to schedule system information, paging information, random access response information and other information common to LTE R8 and LTE-A users in a common search space, the DCI signaling generated according to this embodiment can be placed in a UE-specific search space without any influence upon blind detection of an LTE R8 user.

Second Embodiment:

In this embodiment, three of idle bits in DCI signaling in the existing LTE R8, for scheduling a non-contention based random access and in the DCI format 1A are taken as a CIF field, particularly as follows:

Step S 11: A base station transmits DCI signaling carrying a CIF field to a UE over a PDCCH of a downlink carrier in response to a current service demand, and the DCI signaling is in the following format:

Field of format 0/format 1A differentiation flag, for which one bit is occupied and which, for example, takes the value of 0 to represent the format 0 and the value of 1 to represent the format 1, wherein this field is the same as the normal DCI format 1A;

Field of Localized/Distributed VRB assignment flag, for which one bit is occupied and which takes the value of 0, wherein this information field is set to 0 because this field is not required for scheduling a non-contention based random access;

Resource block assignment field, for which

$$\left\lceil \log_2(N_{RB}^{DL}(N_{RB}^{DL}+1)/2) \right\rceil$$ bits are occupied, and all of which are set to 1, wherein $N_{RB}^{DL}$ represents a system bandwidth in Physical Resource Block (PRB);

Preamble index field, for which six bits are occupied to represent a preamble index for the random access;

PRACH mask index field, for which four bits are occupied to indicate the index of a PRACH channel used for the random access;

CIF field, for which three bits are occupied and which carries information on an uplink component carrier identifier; and

If there is(are) an(some) idle information bit(s) remaining, then it(they) is(are) set to 0 (there is no idle bit in the case of FDD and there are three idle bits in the case of TDD).

Step S12: The UE configured in an cross-carrier scheduling mode detects the DCI signaling in the forgoing format over the PDCCH and then determines that the DCI signaling is DCI signaling for scheduling a non-contention based random access and transmits a preamble sequence indicated in the preamble index field of the DCI signaling to the base station at a time and frequency resource indicated in the resource block assignment field of the DCI signaling over an uplink component carrier corresponding to the uplink component carrier identifier carried in the CIF field of the DCI signaling; and

Step S13: The base station transmits a random access response over the downlink carrier upon reception of the preamble sequence transmitted from the UE and performs subsequent signaling interaction and data transmission.

Since the bit length of the DCI format 1A defined in the LTE R8 is not changed in this embodiment and there is no influence upon blind detection of an LTE R8 user in a common search space, the DCI signaling generated according to this embodiment can be placed in the common search space.

The first and second embodiments can be used separately or in combination, that is, an LTE-A UE configured in an cross-carrier scheduling mode detects blindly the DCI format 1A generated according to the second embodiment in the common search space and then determines it as a DCI for scheduling a non-contention based random access and transmits the preamble over the specific UL CC indicated in the CIF field; and the LTE-A UE configured in an cross-carrier scheduling mode detects blindly the DCI format 1A generated in the first approach in the UE-specific search space and then determines it as a DCI for scheduling a non-contention based random access and transmits the preamble over the specific UL CC indicated in the CIF field.

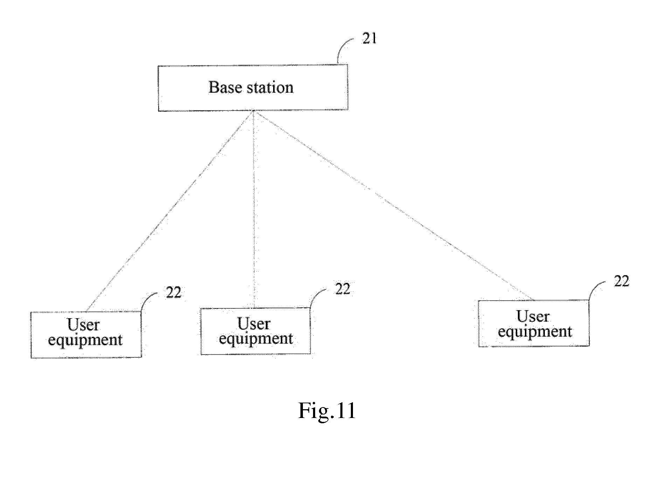

Referring to Fig.11, an embodiment of the invention further provides a radio communication system including:

A base station 21 configured to add information on an uplink component carrier identifier into Downlink Control Information, DCI, signaling for scheduling a user equipment to perform a non-contention based random access and to transmit the DCI signaling to the user equipment over a Physical Downlink Control Channel, PDCCH; and

The user equipment 22 configured to perform blind detection for the PDCCH, to determine detection of the DCI signaling, carrying the information on the uplink component carrier identifier, for scheduling the user equipment to perform a non-contention based random access, and to transmit a preamble sequence to the network side over an uplink component carrier corresponding to the uplink component carrier identifier.

The base station 21 is configured:

To additionally set a CIF field at a fixed location in the DCI signaling for scheduling the user equipment to perform a non-contention based random access and to add the information on the uplink component carrier identifier into the CIF field; and

Correspondingly the user equipment 22 is configured:

To detect over the PDCCH the DCI signaling in which the CIF field carrying the information on the uplink component carrier identifier is set and which schedules the user equipment to perform a non-contention based random access. Specifically the DCI signaling can be detected in a UE-specific search space.

The base station 21 is configured:

To take a part of idle bits in the DCI signaling as a CIF field and to carry the information on the uplink component carrier identifier into the CIF field; and

Correspondingly the user equipment 22 is configured:

To detect over the PDCCH the DCI signaling in which the idle field carries the information on the uplink component carrier identifier and which schedules the user equipment to perform a non-contention based random access. Specifically the DCI signaling can be detected in a common search space or a UE-specific search space.

Referring to Fib.12, an embodiment of the invention further provides a base station which can be applied in a radio communication system and which includes:

A carrier information adding unit 30 configured to add information on an uplink component carrier identifier into Downlink Control Information, DCI, signaling for scheduling a user equipment to perform a non-contention based random access; and

A DCI signaling transmitting unit 31 configured to transmit the DCI signaling over a PDCCH to the user equipment to instruct the user equipment to transmit a preamble sequence to the network side over an uplink component carrier corresponding to the uplink component carrier identifier.

The carrier information adding unit 30 includes:

A field setting unit configured to additionally set a CIF field at a fixed location in the DCI signaling for scheduling the user equipment to perform a non-contention based random access; and

An identifier adding unit configured to add the information on the uplink component carrier identifier into the CIF field.

The field setting unit is configured:

To additionally set the CIF field at the head or tail of the DCI signaling for scheduling the user equipment to perform a non-contention based random access.

The DCI signaling transmitting unit 31 is configured:

To transmit the DCI signaling to the user equipment in a UE-specific search space.

The carrier information adding unit 30 is configured:

To take a part of idle bits in the DCI signaling as a CIF field and to carry the information on the uplink component carrier identifier in the CIF field.

The information adding unit is further configured:

To determine whether there is(are) a(some) further idle bit(s) remaining in the DCI signaling, and if so, then set the idle bit(s) to 0.

The DCI signaling transmitting unit 31 is configured:

To transmit the DCI signaling to the user equipment in a common search space or a UE-specific search space.

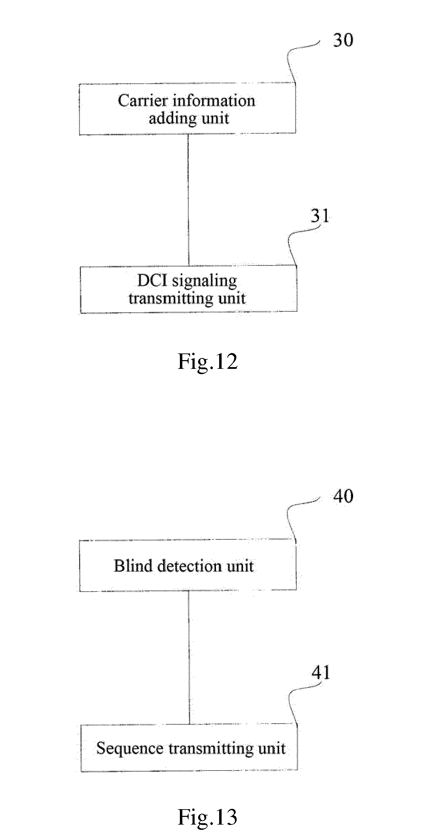

Referring to Fig.13, an embodiment of the invention further provides a user equipment including:

A blind detection unit 40 configured to perform blind detection for a Physical Downlink Control Channel, PDCCH, and to determine detection of DCI signaling, carrying information on an uplink component carrier identifier, for scheduling the user equipment to perform a non-contention based random access; and

A sequence transmitting unit 41 configured for the user equipment to transmit a preamble sequence to the network side over an uplink component carrier corresponding to the uplink component carrier identifier.

The blind detection unit 40 includes a first detection unit and/or a second detection unit, where:

The first detection unit is configured to detect the DCI signaling in which a CIF field carrying the information on the uplink component carrier identifier is set and which schedules the user equipment to perform a non-contention based random access; and

The second detection unit is configured to detect the DCI signaling in which an idle field carries the information on the uplink component carrier identifier and which schedules the user equipment to perform a non-contention based random access.

The first detection unit is configured:

To detect in a UE-specific search space the DCI signaling in which the CIF field is set and which schedules the user equipment to perform a non-contention based random access.

The second detection unit is configured to detect in a common search space or a UE-specific search space the DCI signaling in which the idle field carries the information on the uplink component carrier identifier and which schedules the user equipment to perform a non-contention based random access.

In summary, advantageous effects of the invention include:

In the solutions according to the embodiments of the invention, a base station adds information on an uplink component carrier identifier into DCI signaling for scheduling a user equipment to perform a non-contention based random access and transmits the DCI signaling to the user equipment over a PDCCH, and the user equipment performs blind detection for the PDCCH and transmits a preamble sequence to the network side over an uplink component carrier indicated in the DCI signaling upon detection of the DCI signaling. Apparently in the invention, information on an uplink component carrier identifier is added into DCI signaling for scheduling a user equipment to perform a non-contention based random access so that the user equipment can determine from the DCI an uplink component carrier for transmission of a preamble sequence upon detection of the DCI and further transmit the preamble sequence over the uplink component carrier, thereby providing a support for an cross-carrier non-contention based random access scheduled over a PDCCH.

Those skilled in the art shall appreciate that the embodiments of the invention can be embodied as a method, system or computer program product. Therefore, the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, an optical memory, etc.) in which computer useable program codes are contained.

The invention has been described in a flow chart and/or a block diagram of the method, device (system) and computer program product according to the embodiments of the invention. It shall be appreciated that respective flows and/or blocks in the flow chart and/or the block diagram and combinations of the flows and/or blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Evidently those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

**Claims**

1. A method for scheduling a non-contention based random access in a carrier aggregation system, comprising:

   a base station adding information on an uplink component carrier identifier into Downlink Control Information, DCI, signaling for scheduling a user equipment to perform a non-contention based random access; and
   the base station transmitting the DCI signaling to the user equipment over a Physical Downlink Control Channel, PDCCH, to instruct the user equipment to transmit a preamble sequence to the network side over an uplink component carrier corresponding to the information on the uplink component carrier identifier.

2. The method according to claim 1, wherein a Carrier Indicator Field, CIF, is set at a fixed location in the DCI signaling for scheduling the user equipment to perform a non-contention based random access; and
   the base station adding the information on the uplink component carrier identifier into the DCI signaling for scheduling the user equipment to perform a non-contention based random access comprises: the base station adding the information on the uplink component carrier identifier into the CIF field.

3. The method according to claim 2, wherein the fixed location is the head or tail of the DCI signaling.

4. The method according to claim 2 or 3, wherein the base station transmitting the DCI signaling to the user equipment over the PDCCH comprises:

   the base station transmitting the DCI signaling to the user equipment over the PDCCH in a UE-specific search space.

5. The method according to claim 1, wherein a part of idle bits in the DCI signaling are taken as a CIF field; and
   the base station adding the information on the uplink component carrier identifier into the DCI signaling for scheduling the user equipment to perform a non-contention based random access comprises: the base station carrying the information on the uplink component carrier identifier into the CIF field.

6. The method according to claim 5, wherein after carrying the information on the uplink component carrier identifier into the CIF field, the method further comprises:

   determining whether there is a further idle bit or bits remaining in the DCI signaling, and if so, then setting the remaining idle bit or bits to 0

7. The method according to claim 5 or 6, wherein the base station transmitting the DCI signaling to the user equipment over the PDCCH comprises:

   the base station transmitting the DCI signaling to the user equipment over the PDCCH in a common search space or a UE-specific search space.

8. A method for transmitting a preamble in a carrier aggregation system, comprising:

   a user equipment performing blind detection for a Physical Downlink Control Channel, PDCCH;
   the user equipment determining detection of Downlink Control Information, DCI, signaling carrying information on an uplink component carrier identifier, the DCI signaling scheduling the user equipment to perform a non-contention based random access; and
   the user equipment transmitting a preamble sequence to the network side over an uplink component carrier corresponding to the information on the uplink component carrier identifier.

9. The method according to claim 8, wherein the DCI carrying the information on the uplink component carrier identifier is:

   DCI signaling in which a Carrier Indicator Field, CIF, carrying the information on the uplink component carrier identifier, is set; or
   DCI signaling in which an idle field carries the information on the uplink component carrier identifier.

10. The method according to claim 9, wherein the user equipment detects the DCI signaling in which the CIF field is set, in a UE-specific search space.

11. The method according to claim 9, wherein the user equipment detects the DCI signaling in which the idle field carries the information on the uplink component carrier identifier, in a common search space or a UE-specific search space.

12. A base station, comprising:

a carrier information adding unit configured to add information on an uplink component carrier identifier into Downlink Control Information, DCI, signaling for scheduling a user equipment to perform a non-contention based random access; and
a DCI signaling transmitting unit configured to transmit the DCI signaling over a Physical Downlink Control Channel, PDCCH, to the user equipment to instruct the user equipment to transmit a preamble sequence to the network side over an uplink component carrier corresponding to the uplink component carrier identifier.

13. The base station according to claim 12, wherein the carrier information adding unit comprises:

a field setting unit configured to additionally set a Carrier Indicator Field, CIF, at a fixed location in the DCI signaling for scheduling the user equipment to perform a non-contention based random access; and
an identifier adding unit configured to add the information on the uplink component carrier identifier into the CIF field.

14. The base station according to claim 13, wherein the field setting unit is configured:

to additionally set the CIF field at the head or tail of the DCI signaling for scheduling the user equipment to perform a non-contention based random access.

15. The base station according to claim 13 or 14, wherein the DCI signaling transmitting unit is configured:

to transmit the DCI signaling to the user equipment in a UE-specific search space.

16. The base station according to claim 12, wherein the carrier information adding unit is configured:

to take a part of idle bits in the DCI signaling as a CIF field and to carry the information on the uplink component carrier identifier in the CIF field.

17. The base station according to claim 16, wherein the information adding unit is further configured:

to determine whether there is a further idle bit or bits remaining in the DCI signaling, and if so, then set the remaining idle bit or bits to 0.

18. The base station according to claim 16 or 17, wherein the DCI signaling transmitting unit is configured:

to transmit the DCI signaling to the user equipment in a common search space or a UE-specific search space.

19. A user equipment, comprising:

a blind detection unit configured to perform blind detection for a Physical Downlink Control Channel, PDCCH, and to determine detection of Downlink Control Information, DCI, signaling, carrying information on an uplink component carrier identifier, for scheduling the user equipment to perform a non-contention based random access; and
a sequence transmitting unit configured for the user equipment to transmit a preamble sequence to the network side over an uplink component carrier corresponding to the uplink component carrier identifier.

20. The user equipment according to claim 19, wherein the blind detection unit comprises a first detection unit and/or a second detection unit, where:

the first detection unit is configured to detect the DCI signaling in which a Carrier Indicator Field, CIF, carrying the information on the uplink component carrier identifier is set and which schedules the user equipment to perform a non-contention based random access; and
the second detection unit is configured to detect the DCI signaling in which an idle field carries the information on the uplink component carrier identifier and which schedules the user equipment to perform a non-contention based random access.

21. The user equipment according to claim 20, wherein the first detection unit is configured:

to detect in a UE-specific search space the DCI signaling in which the CIF field is set and which schedules the user equipment to perform a non-contention based random access.

**22.** The user equipment according to claim 20, wherein the second detection unit is configured:

to detect in a common search space or a UE-specific search space the DCI signaling in which the idle field carries the information on the uplink component carrier identifier and which schedules the user equipment to perform a non-contention based random access.

**23.** A radio communication system, comprising:

a base station configured to add information on an uplink component carrier identifier into Downlink Control Information, DCI, signaling for scheduling a user equipment to perform a non-contention based random access and to transmit the DCI signaling to the user equipment over a Physical Downlink Control Channel, PDCCH; and

the user equipment configured to perform blind detection for the PDCCH, to determine detection of the DCI signaling, carrying the information on the uplink component carrier identifier, for scheduling the user equipment to perform a non-contention based random access, and to transmit a preamble sequence to the network side over an uplink component carrier corresponding to the uplink component carrier identifier.

**24.** The system according to claim 23, wherein the base station is configured:

to additionally set a CIF field at a fixed location in the DCI signaling for scheduling the user equipment to perform a non-contention based random access and to add the information on the uplink component carrier identifier into the CIF field; and

the user equipment is configured:

to detect the DCI signaling in which the CIF field carrying the information on the uplink component carrier identifier is set and which schedules the user equipment to perform a non-contention based random access.

**25.** The system according to claim 23, wherein the base station 21 is configured:

to take a part of idle bits in the DCI signaling as a CIF field and to carry the information on the uplink component carrier identifier into the CIF field; and

the user equipment is configured:

to detect the DCI signaling in which the idle field carries the information on the uplink component carrier identifier and which schedules the user equipment to perform a non-contention based random access.

Fig.1

Fig.2

Fig.3

Fig.4

Fig.5

Fig.6

cell

UE

f1 and f2

Scatterer

Fig.7

Repeater 2

f2

Cell

UE

f1

Repeater 1

Fig.8

Site 1

f1

UE

f2

Site 2

Fig.9

A base station adds information on an uplink component
carrier identifier into DCI signaling for scheduling a user
equipment to perform a non-contention based random access

10

The base station transmits the DCI signaling to
the user equipment over a PDCCH

11

The user equipment performs blind detection for the PDCCH
and determines detection of the DCI signaling, carrying the
information on the uplink component carrier identifier, for
scheduling the user equipment to perform a non-contention
based random access

12

The use equipment transmits the preamble sequence to the
network side over the uplink component carrier
corresponding to the uplink component carrier identifier

13

Fig.10

21

Base station

22

User
equipment

22

User
equipment

22

User
equipment

Fig.11

30

Carrier information
adding unit

31

DCI signaling
transmitting unit

Fig.12

40

Blind detection unit

41

Sequence transmitting unit

Fig.13

# INTERNATIONAL SEARCH REPORT

| | International application No. |
|---|---|
| | PCT/CN2011/070744 |

**A. CLASSIFICATION OF SUBJECT MATTER**

**H04W28/06(2009.01) i**

According to International Patent Classification (IPC) or to both national classification and IPC

**B. FIELDS SEARCHED**

Minimum documentation searched (classification system followed by classification symbols)

**IPC: H04W; H04B; H04M; H04L; H04Q**

Documentation searched other than minimum documentation to the extent that such documents are included in the fields searched

Electronic data base consulted during the international search (name of data base and, where practicable, search terms used)

WPI,EPODOC,CPRSABS,CNKI: non, compet+, random w access, carrier w indicator, DCI, PDCCH, CIF, preamble, lte

**C. DOCUMENTS CONSIDERED TO BE RELEVANT**

| Category* | Citation of document, with indication, where appropriate, of the relevant passages | Relevant to claim No. |
|---|---|---|
| PX | CN101883398 A（DATANG MOBILE COMMUNICATIONS EQUIP CO LTD） 10 Nov. 2010 （10.11.2010） | 1 |
| A | Page 4 paragraph 0061- page 6 paragraph 0087 of the description | 2-25 |
| X | R1-094538 CATT. Carrier indicator for LTE-A. 3GPP TSG RAN WG1 meeting #59 Jeju, Korea, 9-13 November, 2009 Sections 2-3 of the document | 1-4, 8-10, 12-15, 19-21, 23-24 |
| A | The whole document | 5-7, 11, 16-18, 22, 25 |
| A | CN101594678 A （PUTIAN TECHNOLOGY INFORMATION RES INST C） 02 Dec. 2009 （02.12.2009） The whole document | 1-25 |
| A | CN101605356A （DATANG MOBILE COMMUNICATIONS EQUIP CO LTD） 16 Dec. 2009 （16.12.2009） The whole document | 1-25 |

☐ Further documents are listed in the continuation of Box C.     ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 14 Mar. 2011(14.03.2011) | **26 May 2011 (26.05.2011)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer WANG, Ju Telephone No. (86-10)62411392 |
|---|---|

Form PCT/ISA /210 (second sheet) (July 2009)

## INTERNATIONAL SEARCH REPORT
Information on patent family members

| | International application No. |
|---|---|
| | PCT/CN2011/070744 |

| Patent Documents referred in the Report | Publication Date | Patent Family | Publication Date |
|---|---|---|---|
| CN101883398 A | 10.11.2010 | None | |
| CN101594678 A | 02.12.2009 | None | |
| CN101605356 A | 16.12.2009 | None | |

Form PCT/ISA /210 (patent family annex) (July 2009)